# EUROPÄISCHE PATENTSCHRIFT

(11) **EP 0 754 404 B1**
(45) Veröffentlichungstag und Bekanntmachung des Hinweises auf die Patenterteilung: **01.09.1999**
(21) Anmeldenummer: 96111008.7
(22) Anmeldetag: 09.07.1996
(51) Int. Cl.: A01G 3/025

(54) **Stielbaumschere**
Pole mounted pruning shears
Sécateur monté sur une perche

(30) Priorität: 20.07.1995 DE 19526540
(43) Veröffentlichungstag der Anmeldung: 22.01.1997
(73) Patentinhaber: WOLF-Geräte GmbH Vertriebsgesellschaft KG, D-57518 Betzdorf/Sieg (DE)
(72) Erfinder: Schneider, Manfred, 66606 St. Wendel (DE)
(74) Vertreter: Koch, Günther, Dipl.-Ing.

(56) Entgegenhaltungen:
- EP-A- 0 485 518
- CH-A- 335 892

## Beschreibung

Die Erfindung bezieht sich auf eine Stielbaumschere mit einem Gelenk zwischen Scherenkörper und Stiel. Über das Gelenk läßt sich bei derartigen Stielbaumscheren der Scherenkörper in verschiedenen Winkelstellungen festlegen, um eine der jeweiligen Arbeitsposition angepaßte Winkelstellung zu erreichen. Die DE-U 82 24 195 zeigt ein Werkzeug, bei dem ein am oberen Ende mit einem Knickgelenk versehener Stiel eine Klemmhalterung für den einen Schenkel einer Baumschere aufweist, deren anderer Schenkel über ein Zugseil betätigbar ist, welches über eine koaxial zur Gelenkachse liegende Rolle geführt ist. Da die Klemmhalterung in der gleichen Ebene wie der Stiel liegt, ist nur eine begrenzte Schwenkbewegung nach beiden Seiten möglich.

Eine Stielbaumschere, bei der die Astschere um 360° um die die Stielachse senkrecht schneidende Gelenkachse verschwenkbar ist, zeigt die DE-PS 949 784. Allerdings ist diese 360°-Schwenkbewegung nur bei geschlossener Schere möglich, weil im geöffneten Zustand der bewegliche Scherenteil mit dem Stiel kollidiert, wenn die Schere nach unten geklappt wird. Hierdurch ist insbesondere auch eine Scherenbetätigung durch Einhängen des Scherenmauls am Ast von oben her unmöglich.

Bei einer Stielbaumschere gemäß der DE-OS 19 11 737 befindet sich das Drehgelenk in einem rechtwinklig am Stielende ansetzenden Arm, und der feste Scherenschenkel ist in Fortsetzung dieses seitlich vorstehenden Armes angeordnet, und das Scherenmaul befindet sich in einem erheblichen seitlichen Abstand zur Drehachse. Die Gelenkachse schneidet die Stielachse senkrecht, so daß die Schneidebene gegenüber der Stielachse um 360° verschwenkbar ist. Hierbei verbleibt das Scherenmaul in jeder Schwenkstellung seitlich gerichtet, so daß das Einführen in das Scherenmaul in jeder Schwenkstellung der Schere von der Seite her erfolgen muß, so daß die Gefahr besteht, daß die zu schneidenden Äste aus dem Scherenmaul herauslaufen, weil über den Stiel seitliche Stützkräfte nicht oder nur schwer ausgeübt werden können.

Eine ähnliche Anordnung zeigt die CH-PS 582 464, bei der die beiden Scherenschenkel in Klemmhülsen festlegbar sind, die an einer gegenüber dem Stiel schwenkbaren Scheibe angeordnet bzw. mit einer Zugseilumlenkrolle versehen sind. Wegen der Zugseilführung und der Anschlagbegrenzung durch die Klemmhülsen ist hier nur eine begrenzte Schwenkbewegung möglich, wobei in jeder Schwenkstellung eine seitliche Einführung des zu schneidenden Astes in die Schere erforderlich ist.

Eine gemäß dem Oberbegriff des Patentanspruchs 1 ausgebildete Stielbaumschere zeigt die EP-PS 0 485 518. Bei dieser bekannten Baumschere läßt sich die Schneidebene in günstiger Weise über einen begrenzten Schwenkbereich der jeweiligen Arbeitssituation anpassen. Der vorliegenden Erfindung liegt die Aufgabe zugrunde, eine gattungsgemäße Stielbaumschere derart weiterzuentwickeln, daß eine 180°-Schwenkbewegung möglich wird, und insbesondere auch ein Astschnitt mit über das Maul eingehängter Schere gewährleistet wird.

Gelöst wird die gestellte Aufgabe durch die im Kennzeichnungsteil des Patentanspruchs 1 angegebenen Merkmale. Dadurch, daß die Schere gegenüber der Gelenkachse mit ihrer Schneidebene versetzt ist, kann die Schere, ohne am Stiel anzustoßen, auch nach unten so weit abgeklappt werden, daß ein vertikaler Schnitt bei eingehängter Schere möglich wird. Dadurch, daß die Zugseilrolle mit ihrem Träger schwenkbar am Scherenschenkel gelagert ist, wird ein leichter Lauf des Zugseils bei jeder denkbaren Zugrichtung möglich, ohne daß das Seil aus der Umlenkrolle seitlich heraustritt und sich verklemmt. Dadurch wird auch die Möglichkeit geschaffen, die Schere von zwei Personen bedienen zu lassen, von denen die eine die Schere über dem Stiel positioniert und die andere die Schere über das Zugseil schließt.

Dadurch, daß das Scherenmaul in abgesenkter Lage neben dem Stiel, d.h. in der Schneidebene zum Stiel versetzt, angeordnet ist, läßt sich die Schere in dem nach unten abgeklappten Zustand am Ast einhängen, was eine besonders bequeme Arbeitsweise gewährleistet. Die Anordnung ist dabei noch so getroffen, daß durch Entlanggleiten des zu schneidenden Astes am Führungsstiel automatisch ein Einlauf in das Scherenmaul erfolgt, so daß auch Äste, zu denen die Sicht zum Teil verdeckt ist, bequem erfaßt und geschnitten werden können.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 eine Ansicht einer erfindungsgemäß ausgebildeten Stielbaumschere, senkrecht zur Schneidebene betrachtet, wobei die Schere nach oben geklappt ist und das Scherenmaul nach oben weist;
Fig. 2 die in Fig. 1 dargestellte Stielbaumschere in einer um 90° verschwenkten Ansicht:
Fig. 3 eine der Fig. 2 entsprechende Ansicht mit schräg nach oben gekippter Schere;
Fig. 4 eine Ansicht der Stielbaumschere mit um 90° gekippter Schere;
Fig. 5 eine Ansicht der schräg nach unten gekippten Stielbaumschere;
Fig. 6 eine der Fig. 1 entsprechende Ansicht der Stielbaumschere mit senkrecht nach unten gekippter Schere, wobei die Schneidebene parallel zur Stielachse verläuft;
Fig. 7 eine gegenüber Fig. 6 um 90° um die Stielachse verschwenkte Ansicht gemäß Fig. 6.

Die Stielbaumschere weist gemäß dem dargestellten Ausführungsbeispiel einen Geräteeinsteckzapfen 10 einer Stielbefestigungskupplung auf, über die die Baumschere mit einem Stiel 12 fest verbindbar ist. Die Stielbefestigungskupplung kann beispielsweise gemäß der DE 31 30 703 C1 ausgebildet sein. Der Geräteeinsteckzapfen 10 ist in einem den Fortsatz des Stieles bildenden Spitzenteil 14 verankert, der in Richtung der Stielachse nach oben einen U-förmigen Gabelarm 16 trägt, dessen Schenkel 18 scheibenförmig ausgebildet sind und einen Gelenkzapfen 20 tragen, zwischen denen die scheibenförmigen U-Schenkel eines Auslegerarms 32 um den Gelenkzapfen 20 schwenkbar sind. Die scheibenförmigen Schenkel 22 tragen radiale Einschnitte 24, die mit einem Verriegelungsbolzen 26 zusammenwirken, der in Längsschlitzen der Schenkel 18 in Richtung der Stielachse verschiebbar geführt und in seinem mittleren Teil durch eine Druckschraubenfeder 28 abgestützt ist, die ihn in jeweils einen der Einschnitte 24 eindrückt, um die jeweilige Winkelstellung zwischen den Schenkeln 18 und 22 formschlüssig festzulegen. An beiden Enden ist der Verriegelungsbolzen 26 mit Handhabeknöpfen 30 ausgestattet, die beide gegen die Kraft der Feder 28 ausgehoben werden müssen, um die formschlüssige Verriegelung zu lösen. Bei zufälliger Betätigung nur eines Handhabeknopfes 30 (z.B. beim Anstoßen an einen Ast) wird nur die Verriegelung an einer Seite ausgelöst und die eingestellte Schwenkstellung bleibt erhalten.

Die um den Gelenkzapfen 20 schwenkbaren U-Schenkel 22 sind an einem Auslegerarm 32 festgelegt, der seinerseits an dem festen Scherenschenkel 34 festgelegt ist. Durch die Länge des Auslegerarmes 32 wird der Abstand zwischen der Schneidebene der Schere und der Gelenkachse 20 hergestellt, welchletztere die Stielachse 36 senkrecht schneidet.

Mit dem festen Scherenschenkel 34 ist ein beweglicher Scherenschenkel 38 über einen Scherengelenkbolzen 40 verbunden. Der Scherenschenkel 38 trägt einen Amboß 42, der mit einem Scherenmesser 44 zusammenwirkt, das mit dem festen Scherenschenkel 34 verbunden ist. Eine am festen Scherenschenkel und am Amboß verankerte Zugfeder 46 sucht die Schere in die Öffnungsstellung zu überführen. Dadurch, daß das Scherenmesser 44 am festen Scherenarm sitzt, wird der Vorteil erreicht, daß ein nur angeschnittener und verklemmter Ast durch den Stiel von dem Messer abgehoben werden kann, was sehr umständlich wäre, wenn - wie beim Stand der Technik - das Messer am beweglichen Scherenschenkel sitzt.

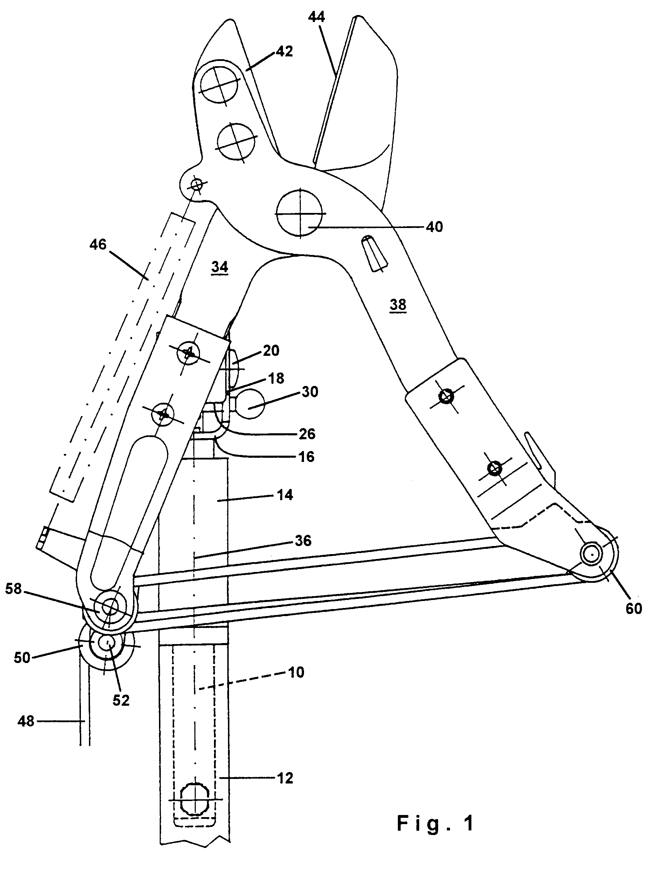

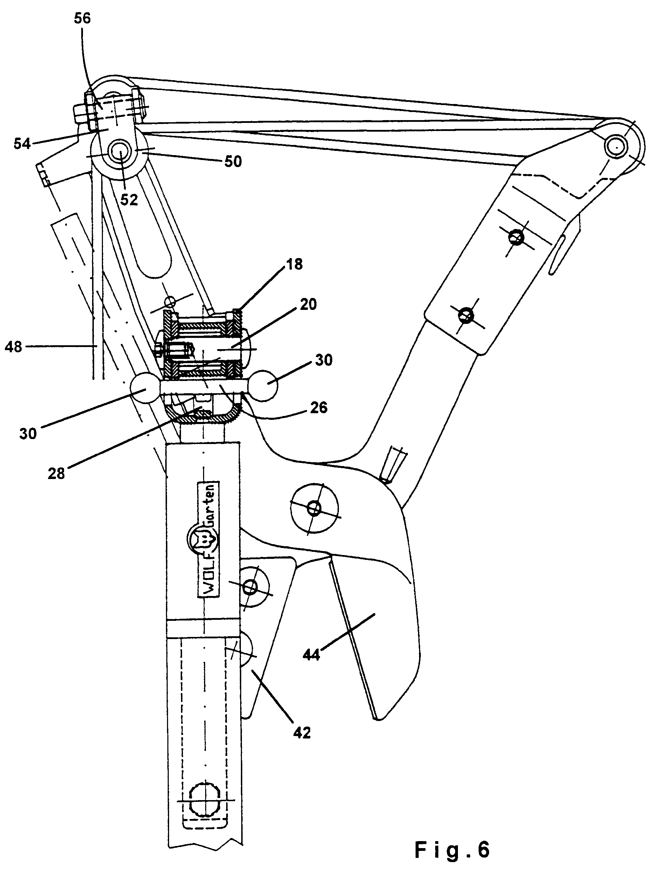

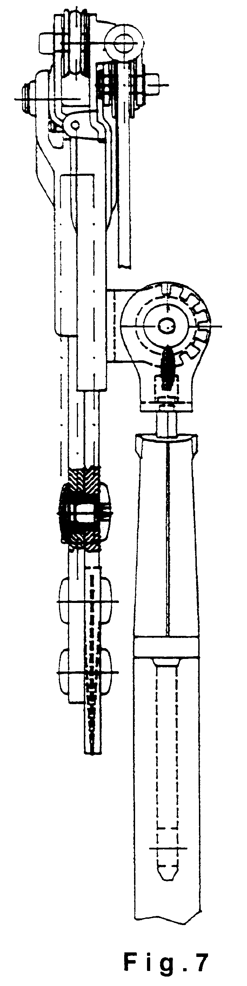

Wie aus den Fig. 1 und 6 ersichtlich, ist der Auslegerarm 32 derart mit dem festen Scherenschenkel 34 bzw. mit dem Gelenk verbunden, daß der feste Scherenschenkel 34 in einem Winkel gegenüber der Stielachse 36 derart angestellt ist, daß das Scherenmaul in jeder Schwenkstellung seitlich des Stieles 12 liegt, was eine Arbeit, unbehindert vom Stiel, zuläßt. Die Anordnung und Ausbildung ist dabei derart getroffen, daß in nach unten geklappter Stellung gemäß Fig. 6 und 7 die äußere Mantellinie des Stiels in die Widerlageebene des Amboß 42 übergeht. Hierdurch wird es möglich, die Schere von oben her in einen Ast einzuhängen, wobei der Stiel als Führung dient, indem der Stiel am Ast entlanggeführt wird, wodurch der Ast automatisch in das geöffnete Scherenmaul eingeführt wird.

Die Schere ist über ein Zugseil 48 zu schließen, das über eine Rolle 50 geführt ist, die um eine Achse 52 drehbar ist, welche von einem Gabelarm 54 getragen wird, der seinerseits um eine Gelenkachse 56 schwenkbar am freien Ende des Gabelarms 54 gelagert ist. Die Gelenkachse 56 ist parallel zur Schneidebene der Schere in der insbesondere aus Fig. 6 ersichtlichen Lage so orientiert, daß das Zugseil 48 in jeder Winkellage der Schere bedient werden kann, und zwar nicht notwendigerweise nur in einer Richtung parallel zur Stielachse, sondern auch schräg hierzu, was insbesondere dann wichtig ist, wenn die Schere von zwei Personen bedient wird, von denen die eine den Stiel hält und die andere das Zugseil betätigt.

Zur Kraftverstärkung ist zwischen den freien Enden der Scherenschenkel 34 und 38 ein Flaschenzug, bestehend aus festen Rollen 58 und losen Rollen 60, angeordnet.

Die Bedienung der Schere ist denkbar einfach. Zunächst wird der Verriegelungsbolzen 26 durch Erfassen der beiden Handhabeknöpfe 30 aus den Verriegelungseinschnitten 24 ausgehoben, und der Scherenkörper wird durch Verschwenken um den Gelenkzapfen 20 in die gewünschte Winkelposition überführt. Durch die gelenkige Anordnung der Seilzugumlenkrolle 50 wird es möglich, das Zugseil 48 in jede Richtung einzustellen, d.h. die Zugkraft am Seil kann in allen praktisch möglichen Richtungen angreifen.

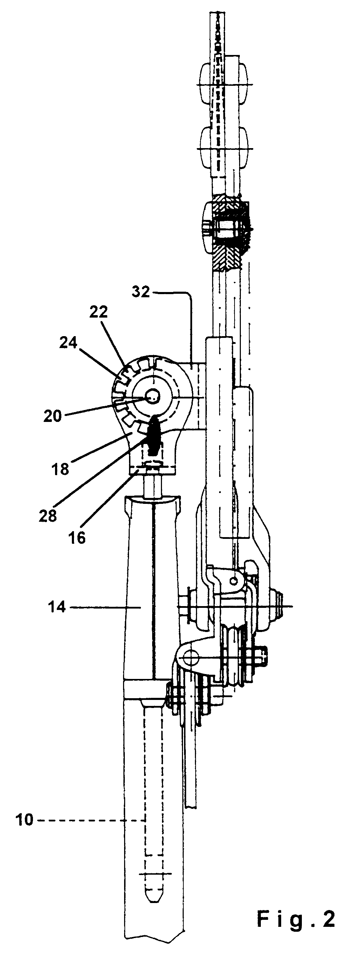

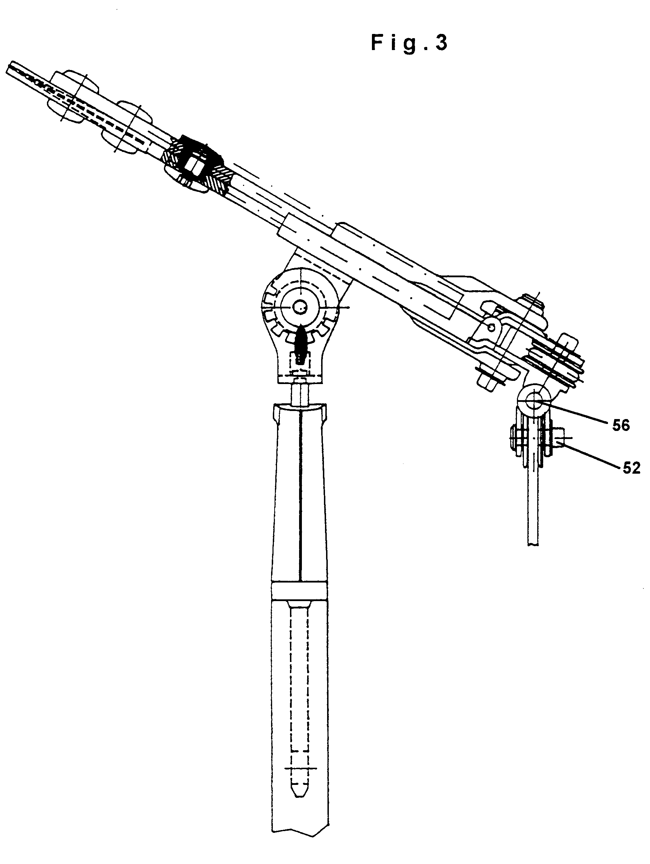

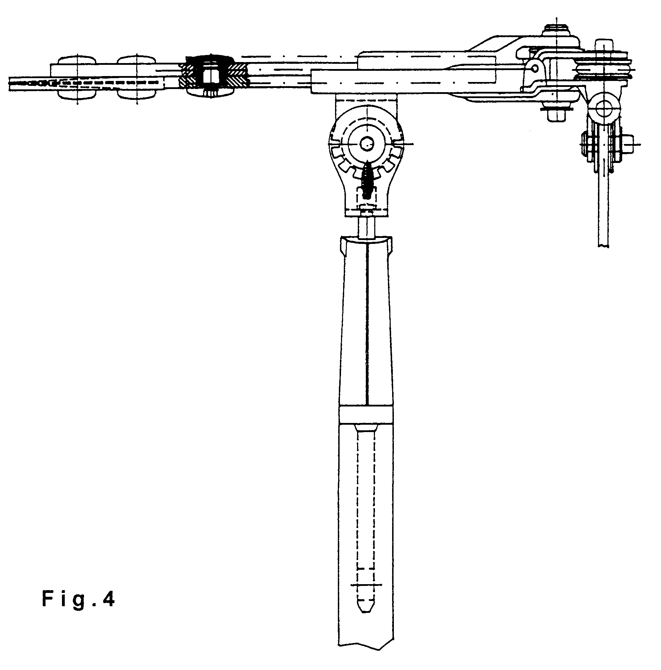

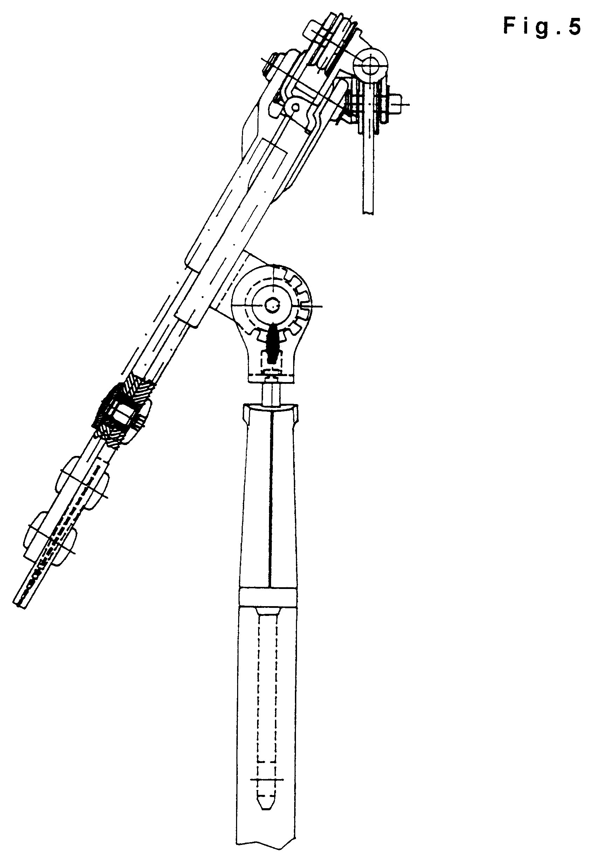

Die Schere kann mit ihrer Schneidebene aus der in Fig. 1 und 2 ersichtlichen, nach oben geklappten Stellung über die Stellung gemäß Fig. 3 in die Horizontalstellung gemäß Fig. 4 und von dieser über die nach unten gerichtete Schrägstellung gemäß Fig. 5 in die nach unten geklappte Stellung gemäß Fig. 6 und 7 überführt werden, wobei auch noch Zwischenstellungen entsprechend der Zahl der Radialeinschnitte möglich sind. Dies bedeutet, daß die Schneidebene der Schere in einem Winkelbereich von 180° gegenüber der Stielachse eingestellt werden kann. Auf diese Weise kann die Stielbaumschere jeder sich bietenden Situation in optimaler Weise angepaßt werden, wodurch sich ein hoher Bedienungskomfort ergibt. So kann z.B. mit der sich aus Fig. 3 ergebenden Schräglage ein stummelloser Schnitt schräg verlaufender Äste erreicht werden.

### Bezugszeichenliste

- 10: Geräteeinsteckzapfen
- 12: Stiel
- 14: Spitzenteil
- 16: Gabelarm
- 18: Schenkel
- 20: Gelenkzapfen
- 22: U-Schenkel
- 24: radiale Einschnitte
- 26: Verriegelungsbolzen
- 28: Druckschraubenfeder
- 30: Handhabeknopf
- 32: Auslegerarm
- 34: Scherenschenkel fest
- 36: Stielachse
- 38: Scherenschenkel beweglich
- 40: Scherengelenkbolzen
- 42: Amboß
- 44: Scherenmesser
- 46: Zugfeder
- 48: Zugseil
- 50: Seilzugumlenkrolle
- 52: Achse
- 54: Gabelarm
- 56: Gelenkachse
- 58: feste Rollen
- 60: Lose Rollen

## Patentansprüche

1. Stielbaumschere mit einem Gelenk (16, 18, 22) zwischen Scherenkörper und Stiel (12) mit den folgenden Merkmalen:
- die Gelenkachse (22) schneidet die Stielachse (36) senkrecht;
- ein fester Scherenschenkel (34) der Schere ist mit dem Gelenk (16, 18, 22) derart verbunden, daß die Schneidebene der Schere gegenüber der Stielachse (36) anstellbar ist;
- ein beweglicher Scherenschenkel (38) der Schere ist über ein Zugseil (48) gegen den festen Scherenschenkel (34) beweglich;
- eine Seilzugumlenkrolle (50) ist am festen Scherenschenkel (34) gelagert;
dadurch gekennzeichnet, daß
- die Schneidebene der Schere gegenüber der Gelenkachse (20) versetzt ist;
- ein Träger (54) der Seilzugumlenkrolle (50) schwenkbar um eine Achse (56) gelagert ist, die parallel zur Schneidebene der Schere oder in dieser liegt;
- das Scherenmaul wenigstens in nach unten abgeklappter Lage neben dem Stiel zu liegen kommt.

2. Stielbaumschere nach Anspruch 1,
dadurch gekennzeichnet, daß in nach unten abgeklappter Stellung des Scherenkörpers bei geöffnetem Scherenmaul der Stiel (12) in die eine Begrenzung des Scherenmauls als Astführung übergeht.

3. Stielbaumschere nach Anspruch 1,
dadurch gekennzeichnet, daß ein Auslegerarm (32) das Schwenkgelenk mit einem mittleren Teil des festen Scherenschenkels (34) verbindet.

4. Stielbaumschere nach den Ansprüchen 1 und 3,
dadurch gekennzeichnet, daß das Schwenkgelenk formschlüssig zusammenwirkende Rastelemente (24, 26) aufweist.

5. Stielbaumschere nach Anspruch 4,
dadurch gekennzeichnet, daß die formschlüssigen Rastelemente einen in radiale Einschnitte des einen Gelenkteils eingreifenden Verriegelungsbolzen (26) des anderen Rastteils aufweist.

6. Stielbaumschere nach Anspruch 5,
dadurch gekennzeichnet, daß der Verriegelungsbolzen (26) in Radialschlitzen von Gabelarmen (16) verschiebbar geführt und durch eine mittlere Druckfeder derart abgestützt ist, daß eine Rastauslösung nur durch Betätigung der beiden an seinen Enden angeordneten Handhaben (30) erfolgen kann.

7. Stielbaumschere nach Anspruch 1,
dadurch gekennzeichnet, daß der Seilzug-Umlenkrollenträger (54) am freien Ende des festen Scherenschenkels (34) um eine Achse (56) gelagert ist, die parallel zur Schneidebene verläuft und gegenüber der Stielachse angestellt ist.

8. Stielbaumschere nach den Ansprüchen 1 bis 7,
dadurch gekennzeichnet, daß zwischen den freien Enden der Scherenschenkel (34 und 38) ein Flaschenzug (58, 60) angeordnet ist.

9. Stielbaumschere nach den Ansprüchen 1 bis 8,
dadurch gekennzeichnet, daß der feste Gelenkteil (18) am Spitzenteil (14) einer Stielbefestigungskupplung festgelegt ist, mit der eine Verbindung mit dem Gerätestiel (12) möglich wird.

10. Stielbaumschere nach einem der Ansprüche 1 bis 9,
dadurch gekennzeichnet, daß eine Zugfeder am festen Scherenschenkel (34) bzw. an dem gegenüberliegenden Scherenteil (42) verankert ist, welche die Schere in die Öffnungsstellung zieht, die durch einen Anschlag begrenzt ist.

11. Stielbaumschere nach einem der Ansprüche 1 bis 10,
dadurch gekennzeichnet, daß das Messer (44) am festen Scherenschenkel (34) und der Amboß (42) am beweglichen Scherenschenkel (38) sitzt.

## Claims

1. Long-handled tree pruner with a joint (16, 18, 22) between the pruner body and the handle (12), having the following features:
- the hinge axis (22) intersects the handle axis (36) vertically;
- a fixed shears side (34) of the pruner is joined to the joint (16, 18, 22) in such a manner that the cutting plane of the shears can be positioned in relation to the handle axis (36);
- a movable shears side (38) of the pruner is movable via a pull cable (48) against the fixed side of the shears (34);
- a cable deflection roller (50) is mounted on the fixed side (34) of the shears;
characterised in that
- the cutting plane of the shears is offset in relation to the hinge axis (20);
- a support (54) for the cable deflection roller (50) is mounted so as to swivel about an axis (56) situated parallel to the cutting plane of the shears or therein;
- the jaw of the shears comes to rest alongside the handle at least in the downwardly tilted position.

2. Long-handled tree pruner according to claim 1, characterised in that when the pruner body is in the downwardly tilted position with the jaw of the shears opened, the handle (12) merges into one boundary of the jaw of the shears to act as a branch guide.

3. Long-handled tree pruner according to claim 1,
characterised in that an outrigger arm (32) joins the swivel joint to a middle portion of the fixed side (34) of the shears.

4. Long-handled tree pruner according to claims 1 and 3,
characterised in that the swivel joint has positively cooperating latching elements (24, 26).

5. Long-handled tree pruner according to claim 4,
characterised in that the positive latching elements have a locking pin (26) which engages in radial incisions on one articulated part and is incorporated on the other latching part.

6. Long-handled tree pruner according to claim 5,
characterised in that the locking pin (26) is displaceably guided in radial slots of fork arms (16) and is supported by a central compression spring in such a manner that release of the catch is only possible by actuating the two handholds (30) arranged on both its ends.

7. Long-handled tree pruner according to claim 1,
characterised in that the cable deflection roller support (54) is mounted on the free end of the fixed side (34) of the shears, about an axis (56) which extends parallel to the cutting plane and is positioned in relation to the handle axis.

8. Long-handled tree pruner according to claims 1 to 7,
characterised in that arranged between the free ends of the sides (34 and 38) of the shears is a pulley block (58, 60).

9. Long-handled tree pruner according to claims 1 to 8,
characterised in that the fixed joint part (18) is located on the top end (14) of a handle attachment coupling, by means of which connection to the appliance handle (12) is possible.

10. Long-handled tree pruner according to any one of claims 1 to 9,
characterised in that a tension spring is anchored on the fixed side (34) of the shears, and on the opposing shears element (42), which spring pulls the shears into the opening position which is delimited by a limit stop.

11. Long-handled tree pruner according to any of claims 1 to 10, characterized in that the blade (44) sits on the fixed side (34) of the shears and the anvil (42) on the movable side (38) of the shears.

## Revendications

1. Sécateur monté sur perche comprenant une articulation (16, 18, 22) entre un corps de sécateur et la perche (12) et présentant les caractéristiques suivantes:
- l'axe d'articulation (22) s'étend perpendiculairement à l'axe de la perche (36);
- une branche fixe (34) du sécateur est liée à l'articulation (16, 18, 22) de manière telle que le plan de coupe du sécateur puisse être incliné par rapport à l'axe de la perche (36);
- une branche mobile (38) du sécateur peut être déplacée par rapport à la branche fixe (34) du sécateur à l'aide d'un câble de traction (48);
- une poulie (50) de renvoi de câble de traction est montée sur la branche fixe (34) du sécateur;
caractérisé parle fait que
- le plan de coupe du sécateur est décalé par rapport à l'axe d'articulation (20);
- un support (54) de la poulie (50) de renvoi de câble de traction est monté pivotant autour d'un axe (56) qui s'étend parallèlement au plan de coupe du sécateur ou se situe dans ce plan;
- la bouche du sécateur est située à proximité de la perche au moins dans la position rabattue.

2. Sécateur monté sur perche selon la revendication l, caractérisé par le fait que, dans la position rabattue du corps de sécateur, la bouche du sécateur étant ouverte, la perche (12) se raccorde en tant que guide-branche à l'une des délimitations de la bouche de sécateur.

3. Sécateur monté sur perche selon la revendication 1, caractérisé par le fait qu'un bras porteur (32) relie l'articulation pivotante à une partie médiane de la branche fixe (34) du sécateur.

4. Sécateur monté sur perche selon les revendications 1 et 3, caractérisé par le fait que l'articulation pivotante comprend des éléments de verrouillage (24, 26) qui coopèrent par complémentarité de formes.

5. Sécateur monté sur perche selon la revendication 4, caractérisé par le fait que les éléments de verrouillage à complémentarité de formes présentent, sur l'un desdits éléments, un axe de verrouillage (26) qui s'engage dans des encoches radiales de l'autre partie de l'articulation.

6. Sécateur monté sur perche selon la revendication 5, caractérisé par le fait que l'axe de verrouillage (26) est guidé mobile en translation dans des fentes radiales de bras fourchus (16) et est soutenu par un ressort de pression médian de manière telle qu'un déclenchement de verrouillage ne peut être produit que par actionnement des deux manettes (30) disposées à ses extrémités.

7. Sécateur monté sur perche selon la revendication 1, caractérisé par le fait que le support (54) de poulie de renvoi de câble de traction est monté sur un axe (56) qui est situé à l'extrémité libre de la branche fixe (34) du sécateur, s'étend parallèlement au plan de coupe et est incliné par rapport a l'axe de la perche.

8. Sécateur monté sur perche selon les revendications 1 à 7, caractérisé par le fait qu'un palan (58, 60) est disposé entre les extrémités libres des branches (34 et 38) du sécateur.

9. Sécateur monté sur perche selon les revendications 1 à 8, caractérisé -par le fait que la partie fixe (18) de l'articulation est montée sur une partie d'extrémité (14) d'un dispositif d'accouplement de perche qui permet d'établir une liaison avec la perche (12) de l'appareil.

10. Sécateur monté sur perche selon une des revendications 1 à 9, caractérisé par le fait qu'un ressort de traction est fixé sur la branche fixe (34) du sécateur et sur la partie de sécateur (42) opposée et tire le sécateur dans la position d'ouverture qui est délimitée par une butée.

11. Sécateur monté sur perche selon une des revendications 1 à 10, caractérisé par le fait que la lame (44) est disposée sur la branche fixe (34) du sécateur et l'enclume (42) sur la branche mobile (38) du sécateur.
